# EUROPÄISCHE PATENTSCHRIFT

(11) **EP 2 059 891 B1**
(45) Veröffentlichungstag und Bekanntmachung des Hinweises auf die Patenterteilung: **07.12.2011**
(21) Anmeldenummer: 07801851.2
(22) Anmeldetag: 23.08.2007
(51) Int. Cl.: G06K 19/077

(54) **VERFAHREN ZUM HERSTELLEN EINES KARTENFÖRMIGEN DATENTRÄGERS**
METHOD FOR PRODUCING A DATA STORAGE MEDIUM IN THE FORM OF A CARD
PROCÉDÉ DE FABRICATION D'UN SUPPORT DE DONNÉES EN FORME DE CARTE

(30) Priorität: 30.08.2006 DE 102006040600
(43) Veröffentlichungstag der Anmeldung: 20.05.2009
(73) Patentinhaber: Giesecke & Devrient GmbH, 81677 München (DE)
(72) Erfinder: TARANTINO, Thomas, 83410 Laufen (DE); BRUS, Bernd, 85659 Forstern (DE); GÖTZ, Thomas, 85570 Markt Schwaben (DE); HUBER, Peter, 82256 Fürstenfeldbruck (DE); BARAK, Renée-Lucia, 82008 Unterhaching (DE); DAX, Gustav, 83052 Heufeld (DE); HAGHIRI, Yahya, (deceased) (DE)
(86) Internationale Anmeldenummer: PCT/EP2007/007423
(87) Internationale Veröffentlichungsnummer: WO 2008/025482

(56) Entgegenhaltungen:
- EP-A- 0 638 873
- EP-A- 0 689 164
- EP-A- 1 413 978
- WO-A-99/47332
- DE-A1- 10 252 351
- FR-A- 2 622 323

## Beschreibung

Die Erfindung betrifft ein Verfahren zum Herstellen eines kartenförmigen Datenträgers. Weiterhin betrifft die Erfindung ein Halbzeug für kartenförmige Datenträger.

Kartenförmige Datenträger weisen in der Regel einen Kartenkörper auf, in den ein integrierter Schaltkreis eingebettet ist und können vielfältig eingesetzt werden, beispielsweise im bargeldlosen Zahlungsverkehr, bei Zugangskontrollen, als Ausweisdokumente, zum Nachweis einer Berechtigung im Mobilfunkbereich usw. Für viele Anwendungsfälle werden die Kartenkörper gemäß standardisierten Formaten hergestellt. Dadurch kann beispielsweise eine Kompatibilität zwischen den kartenförmigen Datenträgern und den für den jeweiligen Anwendungsfall vorgesehenen Lesegeräten gewährleistet werden. Standardisierte Formate werden insbesondere durch die Norm ISO-7810 definiert. Besonders weit verbreitet ist derzeit das Format ID-1, gemäß dem beispielsweise die Kartenkörper nahezu aller derzeit im Umlauf befindlicher Kreditkarten und Scheckkarten ausgebildet sind. Demgemäß existieren sehr viele Fertigungsanlagen zur Herstellung von kartenförmigen Datenträgern im Format ID-1.

Bei einigen Anwendungsfällen sind allerdings kartenförmige Datenträger mit deutlich geringeren Abmessungen als das Format ID-1 erwünscht. Besonders hohe Stückzahlen von kartenförmigen Datenträgern mit kleinformatigen Kartenkörpern kommen derzeit im Bereich des Mobilfunks zum Einsatz. Dort werden die kartenförmigen Datenträger als Sicherheitsmodule, die üblicherweise als SIM bezeichnet werden, in Mobilfunkgeräte eingesteckt. Die Kartenkörper dieser Sicherheitsmodule weisen in der Regel das Format ID-000 auf.

Da ohnehin eine große Zahl von Fertigungsanlagen für kartenförmige Datenträger im Format ID-1 vorhanden ist und kartenförmige Datenträger des Formats ID-1 einfacher zu handhaben sind als des Formats ID-000, geht man bei der Herstellung eines kartenförmigen Datenträgers des Formats ID-000 in der Regel so vor, dass man zunächst einen kartenförmigen Datenträger mit einem Kartenkörper im Format ID-1 herstellt. Innerhalb des ID-1-Kartenkörpers werden die Umrisse eines ID-000-Kartenkörpers ausgebildet, indem der ID-1-Kartenkörper bereichsweise durchtrennt oder geschwächt wird. In diesem Zustand wird der kartenförmige Datenträger an den Kunden ausgeliefert. Der Kunde trennt den kartenförmigen Datenträger im Format ID-000 aus dem ID-1-Kartenkörper heraus.

Eine derartige Ausbildung eines kartenförmigen Datenträgers ist beispielsweise aus der EP 0 495 216 A2 bekannt. Dort ist eine Ausweiskarte mit einem Mikroprozessor offenbart, der mit Kontaktflächen elektrisch verbunden ist. Ein Freischnitt, der im Wesentlichen rechteckig ausgebildet ist, umgibt die Kontaktflächen und den Mikroprozessor dreiseitig. Zwischen den beiden Enden des Freischnitts ist eine Kerbe geradlinig eingebracht.

Aus der EP 1413 978 A1 das den oberbegriff der unabhängigen Ansprüche bildet, ist ein Herstellungsverfahren für kartenförmige Datenträger bekannt, bei dem eine Vielzahl von kleinformatigen Datenträgern auf einer Karte des ID-1-Formats angeordnet ist.

Die bekannte Vorgehensweise bei der Herstellung von kartenförmigen Datenträgern im Format ID-000 erfordert vom Benutzer einen zusätzlichen Aufwand beim Heraustrennen aus dem ID-1-Kartenkörper und hat einen unnötig hohen Materialeinsatz zur Folge, da der verbleibende Rest des ID-1-Kartenkörpers nach dem Heraustrennen des ID-000-Datenträgers keine Funktion mehr hat und als Abfall zu entsorgen ist. Ein weiterer Nachteil besteht im unnötig hohen Platzbedarf bei der Lagerung der ID-1-Kartenkörper vor dem Heraustrennen der ID-000-Datenträger. Außerdem ist es erforderlich, dass die Produktionsmaschinen für ein größeres Format ausgelegt sein müssen als letztendlich hergestellt werden soll.

Der Erfindung liegt die Aufgabe zugrunde, kartenförmige Datenträger, insbesondere im Format ID-000 gemäß der Norm ISO 7810, auf möglichst optimale Weise herzustellen.

Diese Aufgabe wird durch die Merkmalskombination des Anspruchs 1 gelöst.

Bei der Herstellung des Halbzeugs kann in wenigstens einem Teilbereich des Halbzeugs, aus dem keine kartenförmigen Datenträger herausgeteilt werden, eine Vertiefung ausgebildet werden. Auf diese Weise lässt sich der Materialeinsatz reduzieren. Weiterhin ist es möglich, bei der Herstellung des Halbzeugs Zwischenräume zwischen benachbarten kartenförmigen Datenträgern auszusparen. Dies erleichtert das Herausteilen der kartenförmigen Datenträger aus dem Halbzeug und ermöglicht bei den kartenförmigen Datenträgern die Ausbildung einer präzisen Außenkontur.

Beim erfindungsgemäßen Verfahren zur Herstellung eines kartenförmigen Datenträgers mit einem Kartenkörper und einem integrierten Schaltkreis zum Speichern und/oder Verarbeiten von Daten wird ein Halbzeug in einem ersten standardisierten Kartenformat hergestellt, das größer als das Format des kartenförmigen Datenträgers ist. Aus dem Halbzeug wird wenigstens ein kartenförmiger Datenträger herausgeteilt. Das erfindungsgemä-βe Verfahren zeichnet sich dadurch aus, dass zur Fertigstellung des kartenförmigen Datenträgers wenigstens ein maschineller Bearbeitungsschritt mit dem kartenförmigen Datenträger durchgeführt wird, nachdem der kartenförmige Datenträger aus dem Halbzeug herausgeteilt wurde.

Die Erfindung hat den Vorteil, dass sie eine effiziente und kostengünstige Herstellung von kartenförmigen Datenträgern ermöglicht. Das bei kleinformatigen kartenförmigen Datenträgern übliche manuelle Heraustrennen des kartenförmigen Datenträgers durch den Benutzer aus einem Träger größeren Formats entfällt. Ein weiterer Vorteil besteht darin, dass die fertigen kartenförmigen Datenträger Platz sparend gelagert werden können.

Das Halbzeug wird vorzugsweise spritztechnisch hergestellt. Eine spritztechnische Herstellung ermöglicht einen hohen Durchsatz und ist kostengünstig. Insbesondere wird die spritztechnische Herstellung des Halbzeugs so durchgeführt, dass der Anguss außerhalb des kartenförmigen Datenträgers liegt. Dadurch kann eine Beeinträchtigung des kartenförmigen Datenträgers durch den Anguss vermieden werden.

Im Rahmen des erfindungsgemäßen Verfahrens kann wenigstens eine Kavität zur Aufnahme eines Moduls mit dem integrierten Schaltkreis und daran angeschlossenen Kontaktflächen für eine berührende Kontaktierung in einer Position ausgebildet werden, die beim ersten standardisierten Kartenformat gemäß einer Norm für die Kontaktflächen vorgesehen ist. Dies hat den Vorteil, dass relativ viele Bearbeitungsschritte mit einer Bearbeitungsmaschine durchgeführt werden können, die für das erste standardisierte Kartenformat ausgelegt ist.

Ebenso ist es möglich, wenigstens eine Kavität lateral versetzt zur normgemäß vorgesehenen Position der Kontaktflächen auszubilden. Auf diese Weise kann pro Halbzeug eine große Zahl von kartenförmigen Datenträgern hergestellt werden und so der Materialaufwand besonders gering gehalten werden.

Vorzugsweise wird am Halbzeug wenigstens ein Bearbeitungsschritt mit einer Bearbeitungsmaschine durchgeführt, die für das erste standardisierte Kartenformat ausgelegt ist und wenigstens ein Werkzeug aufweist, das an den Versatz zwischen der Position der Kavität und der beim ersten standardisierten Kartenformat gemäß der Norm vorgesehenen Position der Kontaktflächen angepasst ist. Dadurch ist es möglich, trotz einer Abweichung der Kavität von der normgemäßen Position eine Bearbeitungsmaschine einzusetzen, die für die normgemäße Position ausgelegt ist. Weiterhin ist es von Vorteil, wenn wenigstens je eine Kavität zur Aufnahme eines Moduls mit dem integrierten Schaltkreis und daran angeschlossenen Kontaktflächen auf zwei entgegen gesetzten Seiten des Halbzeugs ausgebildet wird. Dadurch ist es beispielsweise möglich den Versatz der Kavität zur normgemäßen Position gering zu halten.

Am Halbzeug kann eine Markierung zur Kennzeichnung eines Referenzpunktes des Halbzeugs ausgebildet werden. Dadurch wird die lagerichtige Bearbeitung des Halbzeugs erleichtert.

Vorzugsweise wird wenigstens ein maschineller Bearbeitungsschritt mit dem kartenförmigen Datenträger durchgeführt, bevor der kartenförmige Datenträger aus dem Halbzeug herausgeteilt wird. Auf diese Weise ist es zum Beispiel möglich, mehrere kartenförmige Datenträger gleichzeitig zu bearbeiten. Beispielsweise können Informationen auf den Kartenkörper des kartenförmigen Datenträgers aufgebracht werden, bevor der kartenförmige Datenträger aus dem Halbzeug herausgeteilt wird. Insbesondere können die Informationen drucktechnisch aufgebracht werden.

Das Halbzeug kann beispielsweise in einem Format gemäß der Norm ISO 7810, insbesondere im Format ID-1, hergestellt werden. Für die Herstellung in diesem Format existieren sehr viele Bearbeitungsmaschinen und ein großer Erfahrungsschatz.

Der kartenförmige Datenträger kann durch eine Stanzoperation oder eine Schneidoperation aus dem Halbzeug herausgeteilt werden. Bei einer bevorzugten Variante des erfindungsgemäßen Verfahrens werden aus dem Halbzeug mehrere kartenförmige Datenträger herausgeteilt. Dies ermöglicht einen hohen Durchsatz und eine gute Ausnutzung des eingesetzten Materials. Insbesondere können aus dem Halbzeug wenigstens vier kartenförmige Datenträger herausgeteilt werden. Besonders vorteilhaft ist es, wenn aus dem Halbzeug die hinsichtlich des Formats des Halbzeugs und des Formats des kartenförmigen Datenträgers maximal mögliche Anzahl kartenförmiger Datenträger herausgeteilt wird. Dabei besteht jeweils die Möglichkeit, dass sämtliche kartenförmige Datenträger durch eine gemeinsame Stanzoperation aus dem Halbzeug herausgeteilt werden. Dies wirkt sich positiv auf den Durchsatz aus.

Der kartenförmige Datenträger kann in einem zweiten standardisierten Kartenformat ausgebildet werden. Vorzugsweise wird der kartenförmige Datenträger in einem Format gemäß der Norm ISO 7810, insbesondere im Format ID-000, ausgebildet.

Nach dem Herausteilen des kartenförmigen Datenträgers aus dem Halbzeug kann der integrierte Schaltkreis in den Kartenkörper des kartenförmigen Datenträgers eingebettet werden. Dies ermöglicht den Einsatz von Implantationsmaschinen, die auf das Format des kartenförmigen Datenträgers optimiert sind und vermeidet das Risiko einer Beschädigung des integrierten Schaltkreises beim Herausteilen des kartenförmigen Datenträgers aus dem Halbzeug. Weiterhin kann nach dem Herausteilen des kartenförmigen Datenträgers aus dem Halbzeug eine elektronische Personalisierung des integrierten Schaltkreises und/oder eine optische Personalisierung des Kartenkörpers durchgeführt werden. Durch die Verlagerung der Personalisierungsschritte nahe an das Ende der Fertigung kann das Risiko reduziert werden, dass bereits personalisierte kartenförmige Datenträger wegen eines Fertigungsfehlers nachproduziert werden müssen.

Die Erfindung bezieht sich weiterhin auf Halbzeug zur Herstellung mehrerer kartenförmiger Datenträger, die jeweils einen Kartenkörper und einen integrierten Schaltkreis zum Speichern und/oder Verarbeiten von Daten aufweisen. Das erfindungsgemäße Halbzeug weist ein standardisiertes Kartenformat auf und zeichnet sich dadurch aus, dass es mehrere Kartenkörper beinhaltet, zwischen denen Zwischenräume spritztechnisch ausgespart sind.

Ein derartiges Halbzeug ermöglicht die effiziente Herstellung von kartenförmigen Datenträgern mit sehr sauber gearbeiteten Kanten.

Die Erfindung wird im Folgenden anhand der in der Zeichnung dargestellten Ausführungsbeispiele näher erläutert.

Es zeigen
- Fig. 1: ein Ausführungsbeispiel einer erfindungsgemäß hergestellten Chipkarte in einer schematischen Aufsicht;
- Fig. 2: ein Flussdiagramm für eine Variante des erfindungsgemäßen Herstellungsverfahrens,
- Fig. 3: ein Ausführungsbeispiel für einen Stempel einer Implantationsmaschine in einer schematischen Seitenansicht,
- Fig. 4: ein weiteres Ausführungsbeispiel des Halbzeugs in einer schematischen Aufsicht und
- Fig. 5: das in Fig. 4 dargestellte Ausführungsbeispiel des Halbzeugs in einer schematischen Schnittdarstellung.

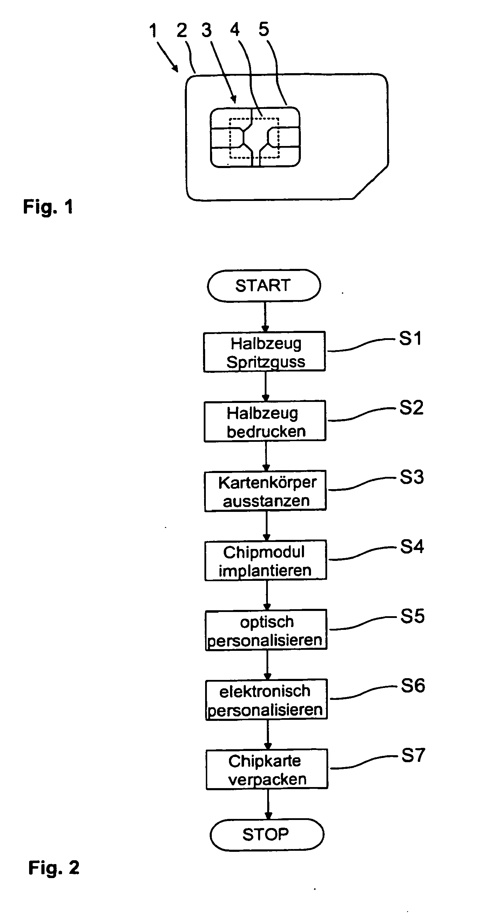

Fig. 1 zeigt ein Ausführungsbeispiel einer erfindungsgemäß hergestellten Chipkarte 1 in einer schematischen Aufsicht. Die Chipkarte 1 weist einen Kartenkörper 2, beispielsweise im Format ID-000 gemäß der Norm ISO 7810, auf. In den Kartenkörper 2 ist ein Chipmodul 3 mit einem integrierten Schaltkreis 4 und Kontaktflächen 5 eingebettet. Die Kontaktflächen 5 dienen der berührenden Kontaktierung durch ein nicht figürlich dargestelltes Lesegerät und sind elektrisch mit dem integrierten Schaltkreis 4 verbunden. Die Chipkarte 1 kann beispielsweise als ein Sicherheitsmodul für ein Mobilfunkgerät ausgebildet sein. Zur Bezeichnung derartiger Sicherheitsmodule wird üblicherweise die Abkürzung "SIM" verwendet.

Die Herstellung der in Fig.1 dargestellten Chipkarte 1 mit Hilfe des erfindungsgemäßen Verfahrens wird im Folgenden anhand der Fig. 2 bis 4 näher erläutert.

Fig. 2 zeigt ein Flussdiagramm für eine Variante des erfindungsgemäßen Herstellungsverfahrens. Der Durchlauf des Flussdiagramms beginnt mit einem Schritt S1, in dem ein kartenförmiges Halbzeug 6, dessen Außenabmessungen dem Format ID-1 der Norm ISO 7810 entsprechen, in Spritzgusstechnik gefertigt wird.

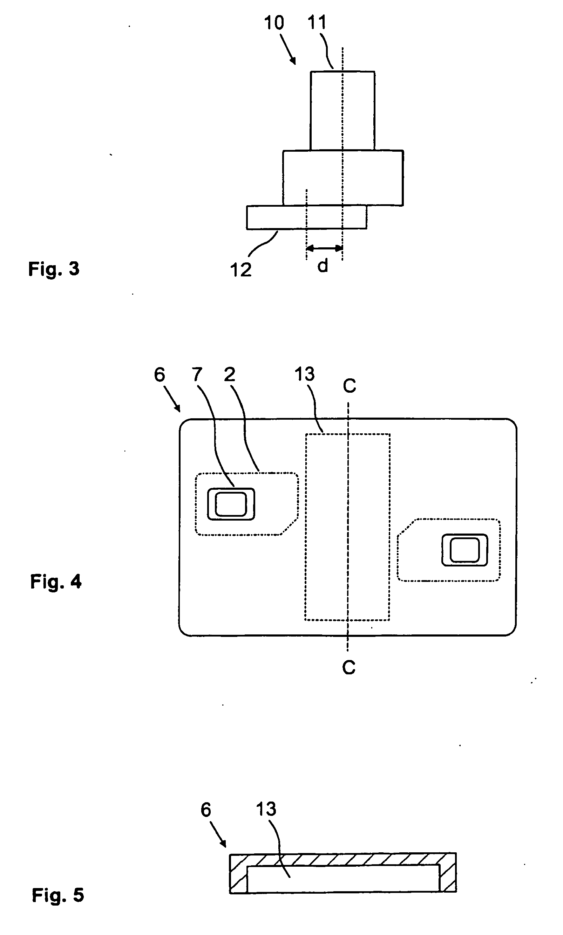

Fig. 3 zeigt ein Ausführungsbeispiel für einen Stempel 10 einer Implantationsmaschine in einer schematischen Seitenansicht. Der Stempel 10 dient dazu, das Chipmodul 3 in eine Kavität 7 des Halbzeugs 6 zu pressen und gleichzeitig zu erwärmen bzw. zu kühlen. Durch das Erwärmen kann beispielsweise ein Klebstoff zum Verkleben des Chipmoduls 3 mit dem Halbzeug 6 aktiviert werden. Das Kühlen dient beispielsweise dazu, unzulässige Temperaturwerte im Bereich des integrierten Schaltkreises 4 zu vermeiden oder das Aushärten des Klebstoffs zu beschleunigen.

Der Stempel 10 weist eine Stempelaufnahme 11 zur Montage des Stempels 10 in der Implantationsmaschine auf. Weiterhin weist der Stempel 10 eine Arbeitsfläche 12 auf, die während des Implantationsvorgangs gegen das Chipmodul 3 und ggf. auch gegen das Halbzeug 6 gepresst wird. Um den Versatz der Kavität 7 gegenüber der gemäß der Norm ISO 7816-2 vorgesehenen Position zu berücksichtigen, ist die Arbeitsfläche 12 im Vergleich zu einem herkömmlichen, d. h. der Norm ISO 7816-2 entsprechenden, Stempel 10 für das Format ID-1 um einen Abstand d verschoben ausgebildet, der dem Versatz der Kavität 7 entspricht. Wenn bei einem herkömmlichen Stempel 10 die Arbeitsfläche 12 beispielsweise symmetrisch zur Stempelaufnahme 11 ausgebildet ist, dann ist die Arbeitsfläche 12 für einen Stempel 10, der bei dem Halbzeug 6 zum Einsatz kommt, um den Abstand d relativ zur symmetrischen Position versetzt.

Um die Implantationsreihenfolge der Chipmodule 3 in die Kavitäten 7 des Halbzeugs 6 festlegen zu können, kann das Halbzeug 6 mit einem Richtungsmerkmal versehen werden. Hierzu kann beispielsweise eine Kerbe an einer Kante des Halbzeugs 6 ausgebildet werden. Dabei ist darauf zu achten, dass die Kerbe außerhalb etwaiger Referenzflächen des Halbzeugs 6 und der aus dem Halbzeug 6 hergestellten Chipkarten 1 liegt.

Es besteht gemäß der Erfindung die Möglichkeit, die Dicke des Halbzeugs 6 in den Bereichen, die außerhalb der zu fertigenden Chipkarten 1 liegen, zu reduzieren. Ein Ausführungsbeispiel für ein derart ausgebildetes Halbzeug 6 ist in den Fig. 4 und 5 dargestellt.

Fig. 4 zeigt ein weiteres Ausführungsbeispiel des Halbzeugs 6 in einer schematischen Aufsicht. Eine zugehörige schematische Schnittdarstellung ist in Fig. 5 abgebildet.

Das in den Fig. 4 und 5 dargestellte Ausführungsbeispiel des Halbzeugs 6 weist zwei Kavitäten 7 auf. Im Bereich zwischen den beiden Kavitäten 7 weist das Halbzeug 6 eine großflächige Vertiefung 13 auf, durch die der Materialeinsatz bei der Herstellung des Halbzeugs 6 reduziert wird.

Alternativ zu einer spritztechnischen Herstellung des Halbzeugs 6 besteht auch die Möglichkeit, das Halbzeug 6 durch Lamination mehrerer Kunststofffolien herzustellen. Dies kann insbesondere dann erforderlich sein, wenn hohe Anforderungen an die Verschleißfestigkeit des Aufdrucks gestellt werden oder wenn spezielle Sicherheitsmerkmale gewünscht werden, die sich bei einem spritztechnisch ausgebildeten Halbzeug 6 nicht oder nur schwer realisieren lassen.

Auf die vorstehend beschriebene Weise können kleinformatige Chipkarten 1 aus einem Halbzeug 6 hergestellt werden, das ein für Chipkarten 1 standardisiertes Format aufweist. Das Halbzeug 6 weist vorzugsweise das Format ID-1 gemäß der Norm ISO 7810 auf. Es kann aber auch ein anderes standardisiertes Format zum Einsatz kommen. Die Chipkarten 1 weisen vorzugsweise ebenfalls ein standardisiertes Format auf, beispielsweise das Format ID-000 gemäß der Norm ISO 7810. Dieses Format wird insbesondere bei Mobilfunkgeräten eingesetzt. Weiterhin können die Chipkarten 1 auch als Speicherkarten für Fotoapparate, Mikrocomputer usw. in den dafür vorgesehenen Formaten ausgebildet sein, beispielsweise als Multimedia Card.

## Patentansprüche

1. Verfahren zur Herstellung eines kartenförmigen Datenträgers (1) mit einem Kartenkörper (2) und einem integrierten Schaltkreis (4) zum Speichern und/oder Verarbeiten von Daten, wobei ein Halbzeug (6) in einem ersten standardisierten Kartenformat hergestellt wird, das größer als das Format des kartenförmigen Datenträgers (1) ist und wenigstens ein kartenförmiger Datenträger (1) aus dem Halbzeug (6) herausgeteilt wird und zur Fertigstellung des kartenförmigen Datenträgers (1) wenigstens ein maschineller Bearbeitungsschritt mit dem kartenförmigen Datenträger (1) durchgeführt wird, nachdem der kartenförmige Datenträger (1) aus dem Halbzeug (6) herausgeteilt wurde, **dadurch gekennzeichnet, dass** bei der Herstellung des Halbzeugs (6) in wenigstens einem Teilbereich des Halbzeugs (6), aus dem kein kartenförmiger Datenträger (1) herausgeteilt wird eine Vertiefung (13) ausgebildet wird.

2. Verfahren nach Anspruch 1, **dadurch gekennzeichnet, dass** das Halbzeug (6) spritztechnisch hergestellt wird.

3. Verfahren nach Anspruch 2, **dadurch gekennzeichnet, dass** die spritztechnische Herstellung des Halbzeugs (6) so durchgeführt wird, dass der Anguss außerhalb des kartenförmigen Datenträgers (1) liegt.

4. Verfahren nach einem der vorhergehenden Ansprüche, **dadurch gekennzeichnet, dass** bei der Herstellung des Halbzeugs (6) Zwischenräume (8) zwischen benachbarten kartenförmigen Datenträgern (1) ausgespart werden.

5. Verfahren nach einem der vorhergehenden Ansprüche, **dadurch gekennzeichnet, dass** wenigstens eine Kavität (7) zur Aufnahme eines Moduls (3) mit dem integrierten Schaltkreis (4) und daran angeschlossenen Kontaktflächen (5) für eine berührende Kontaktierung in einer Position ausgebildet wird, die beim ersten standardisierten Kartenformat gemäß einer Norm für die Kontaktflächen (5) vorgesehen ist.

6. Verfahren nach einem der vorhergehenden Ansprüche, **dadurch gekennzeichnet, dass** wenigstens eine Kavität (7) zur Aufnahme eines Moduls (3) mit dem integrierten Schaltkreis (4) und daran angeschlossenen Kontaktflächen (5) für eine berührende Kontaktierung lateral versetzt zu einer Position ausgebildet wird, die beim ersten standardisierten Kartenformat gemäß einer Norm für die Kontaktflächen (5) vorgesehen ist.

7. Verfahren nach Anspruch 6, **dadurch gekennzeichnet, dass** am Halbzeug (6) wenigstens ein Bearbeitungsschritt mit einer Bearbeitungsmaschine durchgeführt wird, die für das erste standardisierte Kartenformat ausgelegt ist und wenigstens ein Werkzeug (10) aufweist, das an den Versatz zwischen der Position der Kavität (7) und der beim ersten standardisierten Kartenformat gemäß der Norm vorgesehenen Position der Kontaktflächen (5) angepasst ist.

8. Verfahren nach einem der vorhergehenden Ansprüche, **dadurch gekennzeichnet, dass** wenigstens je eine Kavität (7) zur Aufnahme eines Moduls (3) mit dem integrierten Schaltkreis (4) und daran angeschlossenen Kontaktflächen (5) auf zwei entgegen gesetzten Seiten des Halbzeugs (6) ausgebildet wird.

9. Verfahren nach einem der vorhergehenden Ansprüche, **dadurch gekennzeichnet, dass** am Halbzeug (6) eine Markierung zur Kennzeichnung eines Referenzpunktes des Halbzeugs (6) ausgebildet wird.

10. Verfahren nach einem der vorhergehenden Ansprüche, **dadurch gekennzeichnet, dass** wenigstens ein maschineller Bearbeitungsschritt mit dem kartenförmigen Datenträger (1) durchgeführt wird, bevor der kartenförmige Datenträger (1) aus dem Halbzeug (6) herausgeteilt wird.

11. Verfahren nach Anspruch 10, **dadurch gekennzeichnet, dass** Informationen auf den Kartenkörper (2) des kartenförmigen Datenträgers (1) aufgebracht werden, bevor der kartenförmige Datenträger (1) aus dem Halbzeug (6) herausgeteilt wird.

12. Verfahren nach Anspruch 11, **dadurch gekennzeichnet, dass** die Informationen drucktechnisch aufgebracht werden.

13. Verfahren nach einem der vorhergehenden Ansprüche, **dadurch gekennzeichnet, dass** das Halbzeug (6) in einem Format gemäß der Norm ISO 7810, insbesondere im Format ID-1, hergestellt wird.

14. Verfahren nach einem der vorhergehenden Ansprüche, **dadurch gekennzeichnet, dass** der kartenförmige Datenträger (1) durch eine Stanzoperation oder eine Schneidoperation aus dem Halbzeug (6) herausgeteilt wird.

15. Verfahren nach einem der vorhergehenden Ansprüche, **dadurch gekennzeichnet, dass** aus dem Halbzeug (6) mehrere kartenförmige Datenträger (1) herausgeteilt werden.

16. Verfahren nach einem der vorhergehenden Ansprüche, **dadurch gekennzeichnet, dass** aus dem Halbzeug (6) wenigstens vier kartenförmige Datenträger (1) herausgeteilt werden.

17. Verfahren nach einem der vorhergehenden Ansprüche, **dadurch gekennzeichnet, dass** aus dem Halbzeug (6) die hinsichtlich des Formats des Halbzeugs (6) und des Formats des kartenförmigen Datenträgers (1) maximal mögliche Anzahl kartenförmiger Datenträger (1) herausgeteilt wird.

18. Verfahren nach einem der Ansprüche 15 bis 17, **dadurch gekennzeichnet, dass** sämtliche kartenförmige Datenträger (1) durch eine gemeinsame Stanzoperation aus dem Halbzeug (6) herausgeteilt werden.

19. Verfahren nach einem der vorhergehenden Ansprüche, **dadurch gekennzeichnet, dass** der kartenförmige Datenträger (1) in einem zweiten standardisierten Kartenformat ausgebildet wird.

20. Verfahren nach Anspruch 19, **dadurch gekennzeichnet, dass** der kartenförmige Datenträger (1) in einem Format gemäß der Norm ISO 7810, insbesondere im Format ID-000, ausgebildet wird.

21. Verfahren nach einem der vorhergehenden Ansprüche, **dadurch gekennzeichnet, dass** nach dem Herausteilen des kartenförmigen Datenträgers (1) aus dem Halbzeug (6) der integrierte Schaltkreis (4) in den Kärtenkörper (2) des kartenförmigen Datenträgers (1) eingebettet wird.

22. Verfahren nach einem der vorhergehenden Ansprüche, **dadurch gekennzeichnet, dass** nach dem Herausteilen des kartenförmigen Datenträgers (1) aus dem Halbzeug (6) eine elektronische Personalisierung des integrierten Schaltkreises (4) und/ oder eine optische Personalisierung des Kartenkörpers (2) durchgeführt werden.

23. Halbzeug zur Herstellung mehrerer kartenförmiger Datenträger (1), die jeweils einen Kartenkörper (2) und einen integrierten Schaltkreis (4) zum Speichern und/ oder Verarbeiten von Daten aufweisen, wobei das Halbzeug (6) ein standardisiertes Kartenformat aufweist, **dadurch gekennzeichnet, dass** das Halbzeug (6) in wenigstens einem Teilbereich, aus dem keine kartenförmigen Datenträger (1) herausgeteilt werden, eine Vertiefung (13) aufweist.

## Claims

1. A method for producing a card-shaped data carrier (1) having a card body (2) and an integrated circuit (4) for storing and/ or processing data, wherein a semifinished product (6) is produced in a first standardized card format which is larger than the format of the card-shaped data carrier (1) and at least one card-shaped data carrier (1) is detached from the semifinished product (6) and for finishing the card-shaped data carrier (1) at least one machine-processing step is carried out with the card-shaped data carrier (1) after the card-shaped data carrier (1) was detached from the semifinished product (6), **characterized in that** on producing the semifinished product (6), in at least a partial area of the semifinished product (6) from which no card-shaped data carrier (1) is detached, a depression (13) is formed.

2. The method according to claim 1, **characterized in that** the semifinished product (6) is produced by injection technology.

3. The method according to claim 2, **characterized in that** the production of the semifinished product (6) by injection technology is carried out in such a way that the gate lies outside the card-shaped data carrier (1).

4. The method according to any of the previous claims, **characterized in that** on producing the semifinished product (6) spaces (8) between neighboring card-shaped data carriers (1) are left open.

5. The method according to any of the previous claims, **characterized in that** at least one cavity (7) is formed for receiving a module (3) having the integrated circuit (4) and contact areas (5) connected thereto for a contact-type contacting in a position which in the first standardized card format is provided according to a standard for the contact areas (5).

6. The method according to any of the previous claims, **characterized in that** at least one cavity (7) is formed for receiving a module (3) having the integrated circuit (4) and contact areas (5) connected thereto for a contact-type contacting in a fashion laterally offset to a position which in the first standardized card format is provided according to a standard for the contact areas (5).

7. The method according to claim 6, **characterized in that** at the semifinished product (6) at least one processing step is carried out with a processing machine which is adapted to the first standardized card format and has at least one tool (10) which is adjusted to the offset between the position of the cavity (7) and the position of the contact areas (5) provided according to the standard in the first standardized card format.

8. The method according to any of the previous claims, **characterized in that** at least one cavity (7) for receiving a module (3) having the integrated circuit (4) and contact areas (5) connected thereto is formed on each of the two opposing sides of the semifinished product (6).

9. The method according to any of the previous claims, **characterized in that** at the semifinished product (6) a marking is formed for identifying a reference point of the semifinished product (6).

10. The method according to any of the previous claims, **characterized in that** at least one machine-processing step is carried out with the card-shaped data carrier (1), before the card-shaped data carrier (1) is detached from the semifinished product (6).

11. The method according to claim 10, **characterized in that** pieces of information are applied onto the card body (2) of the card-shaped data carrier (1), before the card-shaped data carrier (1) is detached from the semifinished product (6).

12. The method according to claim 11, **characterized in that** the pieces of information are applied by printing technology.

13. The method according to any of the previous claims, **characterized in that** the semifinished product (6) is produced in a format according to the ISO 7810 standard, in particular in the ID-1 format.

14. The method according to any of the previous claims, **characterized in that** the card-shaped data carrier (1) is detached from the semifinished product (6) by a punching operation or a cutting operation.

15. The method according to any of the previous claims, **characterized in that** from the semifinished product (6) a plurality of card-shaped data carriers (1) are detached.

16. The method according to any of the previous claims, **characterized in that** from the semifinished product (6) at least four card-shaped data carriers (1) are detached.

17. The method according to any of the previous claims, **characterized in that** from the semifinished product (6) the maximum possible number of card-shaped data carriers (1) with respect to the format of the semifinished product (6) and the format of the card-shaped data carrier (1) is detached.

18. The method according to any of the claims 15 to 17, **characterized in that** all card-shaped data carriers (1) are detached from the semifinished product (6) by a joint punching operation.

19. The method according to any of the previous claims, **characterized in that** the card-shaped data carrier (1) is formed in a second standardized card format.

20. The method according to claim 19, **characterized in that** the card-shaped data carrier (1) is formed in a format according to the ISO 7810 standard, in particular in the ID-000 format.

21. The method according to any of the previous claims, **characterized in that** after the detachment of the card-shaped data carrier (1) from the semifinished product (6) the integrated circuit (4) is embedded in the card body (2) of the card-shaped data carrier (1).

22. The method according to any of the previous claims, **characterized in that** after the detachment of the card-shaped data carrier (1) from the semifinished product (6) an electronic personalization of the integrated circuit (4) and/or an optical personalization of the card body (2) are carried out.

23. A semifinished product for producing a plurality of card-shaped data carriers (1) which each have a card body (2) and an integrated circuit (4) for storing and/or processing data, the semifinished product (6) having a standardized card format, **characterized in that** the semifinished product (6) has, in at least a partial area from which no card-shaped data carriers (1) are detached, a depression (13).

## Revendications

1. Procédé de fabrication d'un support de données (1) en forme de carte présentant un corps de carte (2) et un circuit intégré (4) pour la mémorisation et/ou le traitement de données, où un produit semi-fini (6) est fabriqué dans un premier format de carte normalisé qui est plus grand que le format du support de données (1) en forme de carte, où au moins un support de données (1) en forme de carte est détaché du produit semi-fini (6), et où, pour la finition du support de données (1) en forme de carte, au moins une étape d'usinage mécanisée est effectuée sur le support de données (1) en forme de carte, après que le support de données (1) en forme de carte a été détaché du produit semi-fini (6), **caractérisé en ce que**, lors de la fabrication du produit semi-fini (6), un évidement (13) est réalisé dans au moins une zone partielle du produit semi-fini (6) dont aucun support de données (1) en forme de carte n'est détaché.

2. Procédé selon la revendication 1, **caractérisé en ce que** le produit semi-fini (6) est fabriqué par technique d'injection.

3. Procédé selon la revendication 2, **caractérisé en ce que** la fabrication par technique d'injection du produit semi-fini (6) est effectuée de telle manière que le culot d'injection soit situé à l'extérieur du support de données (1) en forme de carte.

4. Procédé selon l'une des revendications précédentes, **caractérisé en ce que**, lors de la fabrication du produit semi-fini (6), des interstices (8) sont ménagés entre des supports de données (1) en forme de carte contigus.

5. Procédé selon l'une des revendications précédentes, **caractérisé en ce qu'**au moins une cavité (7) est réalisée pour la réception d'un module (3) avec le circuit intégré (4) et des surfaces de contact (5) adjacentes pour une mise en contact dans une position, laquelle est prévue conformément à une norme pour les surfaces de contact (5) pour le premier format de carte normalisé.

6. Procédé selon l'une des revendications précédentes, **caractérisé en ce qu'**au moins une cavité (7) est réalisée pour la réception d'un module (3) avec le circuit intégré (4) et des surfaces de contact (5) adjacentes pour une mise en contact, en décalage latéral par rapport à une position, laquelle est prévue conformément à une norme pour les surfaces de contact (5) pour le premier format de carte normalisé.

7. Procédé selon la revendication 6, **caractérisé en ce qu'**au moins une étape d'usinage est effectuée sur le produit semi-fini (6) avec une machine à usiner conçue pour le premier format de carte normalisé et comportant au moins un outil (10) adapté au décalage entre la position de la cavité (7) et la position des surfaces de contact (5) prévue conformément à la norme pour le premier format de carte normalisé.

8. Procédé selon l'une des revendications précédentes, **caractérisé en ce qu'**au moins une cavité (7) est réalisée par coté pour la réception d'un module (3) avec le circuit intégré (4) et des surfaces de contact (5) adjacentes sur deux côtés opposés du produit semi-fini (6).

9. Procédé selon l'une des revendications précédentes, **caractérisé en ce qu'**une marque est réalisée sur le produit semi-fini (6) pour le repérage d'un point de référence du produit semi-fini (6).

10. Procédé selon l'une des revendications précédentes, **caractérisé en ce qu'**au moins une étape d'usinage mécanisée est effectuée sur le support de données (1) en forme de carte, avant que le support de données (1) en forme de carte ne soit détaché du produit semi-fini (6).

11. Procédé selon la revendication 10, **caractérisé en ce que** des informations sont appliquées sur le corps de carte (2) du support de données (1) en forme de carte, avant que le support de données (1) en forme de carte ne soit détaché du produit semi-fini (6).

12. Procédé selon la revendication 11, **caractérisé en ce que** les informations sont appliquées par technique d'impression.

13. Procédé selon l'une des revendications précédentes, **caractérisé en ce que** le produit semi-fini (6) est fabriqué dans un format conforme à la norme ISO 7810, en particulier le format ID-I.

14. Procédé selon l'une des revendications précédentes, **caractérisé en ce que** le support de données (1) en forme de carte est détaché du produit semi-fini (6) par une opération de poinçonnage ou une opération de découpe.

15. Procédé selon l'une des revendications précédentes, **caractérisé en ce que** plusieurs supports de données (1) en forme de carte sont détachés du produit semi-fini (6).

16. Procédé selon l'une des revendications précédentes, **caractérisé en ce qu'**au moins quatre supports de données (1) en forme de carte sont détachés du produit semi-fini (6).

17. Procédé selon l'une des revendications précédentes, **caractérisé en ce que** le nombre maximal possible de supports de données (1) en forme de carte, en considération du format du produit semi-fini (6) et du format du support de données (1) en forme de carte, est détaché du produit semi-fini (6).

18. Procédé selon l'une des revendications 15 à 17, **caractérisé en ce que** tous les supports de données (1) en forme de carte sont détachés du produit semi-fini (6) en une opération de découpe commune.

19. Procédé selon l'une des revendications précédentes, **caractérisé en ce que** le support de données (1) en forme de carte est réalisé dans un deuxième format de carte normalisé.

20. Procédé selon la revendication 19, **caractérisé en ce que** le support de données (1) en forme de carte est fabriqué dans un format conforme à la norme ISO 7810, en particulier le format ID-000.

21. Procédé selon l'une des revendications précédentes, **caractérisé en ce qu'**après détachement du support de données (1) en forme de carte du produit semi-fini (6), le circuit intégré (4) est incorporé au corps de carte (2) du support de données (1) en forme de carte.

22. Procédé selon l'une des revendications précédentes, **caractérisé en ce qu'**après détachement du support de données (1) en forme de carte du produit semi-fini (6), une personnalisation électronique du circuit intégré (4) et/ou une personnalisation optique du corps de carte (2) sont effectuées.

23. Produit semi-fini pour la fabrication de plusieurs supports de données (1) en forme de carte, qui comportent chacun un corps de carte (2) et un circuit intégré (4) pour la mémorisation et/ou le traitement de données, le produit semi-fini (6) présentant un format de carte normalisé, **caractérisé en ce que** le produit semi-fini (6) comporte un évidement (13) réalisé dans au moins une zone partielle dont aucun support de données (1) en forme de carte n'est détaché.
